# EUROPEAN PATENT APPLICATION

(11) **EP 2 819 032 A1**
(43) Date of publication of application: **31.12.2014**
(21) Application number: 13810133.2
(22) Date of filing: 18.01.2013
(51) Int. Cl.: G06F 17/30

(54) **METHOD AND DEVICE FOR QUALITY INSPECTION PROCESSING**

(30) Priority: 26.06.2012 CN 201210213246
(71) Applicant: Huawei Technologies Co., Ltd., Shenzhen, Guangdong 518129 (CN)
(72) Inventor: ZHOU, Hongkai, Shenzhen Guangdong 518129 (CN); ZHOU, Shuangsheng, Shenzhen Guangdong 518129 (CN)
(74) Representative: Pfenning, Meinig & Partner GbR
(86) International application number: PCT/CN2013/070729
(87) International publication number: WO 2014/000441

(57) **Abstract**

The present invention provides a quality inspection processing method and device. The method includes: recording a media record of a current service; acquiring each media type in the recorded media record, and searching for and segmenting the recorded media record to acquire a sub-media record corresponding to each media type; and for each sub-media record, performing quality inspection processing on the sub-media record according to a policy that corresponds to the media type of the sub-media record, so as to acquire a quality inspection result of the media record.

## Description

### TECHNICAL FIELD

The present invention relates to media technologies, and in particular, to a quality inspection processing method and device.

### BACKGROUND

During a quality inspection in a multimedia call center, a quality inspector needs to perform a quality inspection on media records (that is, statements) in voice, text, email, fax, and video communication between a business representative and a customer. Specifically, this quality inspection manner requires that the quality inspector should thoroughly perform a quality inspection on the statements, and find a good point and an abnormal point in the quality inspection. For example, the good point may be used to identify a voice or text of the customer's praise, and the abnormal point may be used to identify a voice or text of customer's grievances, criticisms, or complaints.

However, because a traditional quality inspection manner requires that the quality inspector should thoroughly perform a quality inspection on the statements, the good points and the abnormal points in the statements cannot be quickly and effectively found, thereby causing an inefficient quality inspection problem.

### SUMMARY

The present invention provides a quality inspection processing method and device, so as to resolve a problem in a traditional quality inspection manner in the prior art, that is, a quality inspector needs to thoroughly perform a quality inspection on media records, thereby causing an inefficient quality inspection problem.

One aspect of the present invention provides a quality inspection processing method, including:
recording a media record of a current service;
acquiring each media type in the recorded media record, and searching for and segmenting the recorded media record to acquire a sub-media record corresponding to each media type; and
for each sub-media record, performing quality inspection processing on the sub-media record according to a policy that corresponds to the media type of the sub-media record, so as to acquire a quality inspection result of the media record.

Another aspect of the present invention provides a quality inspection processing device, including:
a recording module, configured to record a media record of a current service;
a media record searching and segmenting module, configured to acquire each media type in the recorded media record, and search for and segment the recorded media record to acquire a sub-media record corresponding to each media type; and
a quality inspection processing module, configured to: for each sub-media record, perform quality inspection processing on the sub-media record according to a policy that corresponds to the media type of the sub-media record, so as to acquire a quality inspection result of the media record.

The technical effects of the present invention are: A media record of a current service is recorded; each media type in the recorded media record is acquired, the recorded media record is searched for and segmented to acquire a sub-media record corresponding to each media type; in addition, for each sub-media record, quality inspection processing is performed on the sub-media record according to a policy that corresponds to the media type of the sub-media record, so as to acquire a quality inspection result of the media record. In this way, a quality inspector does not need to perform a quality inspection on the entire media record, but only needs to review the quality inspection result to complete the quality inspection on the entire media records, thereby effectively improving the quality inspection efficiency.

### BRIEF DESCRIPTION OF DRAWINGS

FIG. 1 is a flowchart of an embodiment of a quality inspection processing method according to the present invention;
FIG. 2A and FIG. 2B are a schematic diagram of a specific implementation manner of a quality inspection processing method according to the present invention; and
FIG. 3 is a schematic structural diagram of an embodiment of a quality inspection processing device according to the present invention.

### DESCRIPTION OF EMBODIMENTS

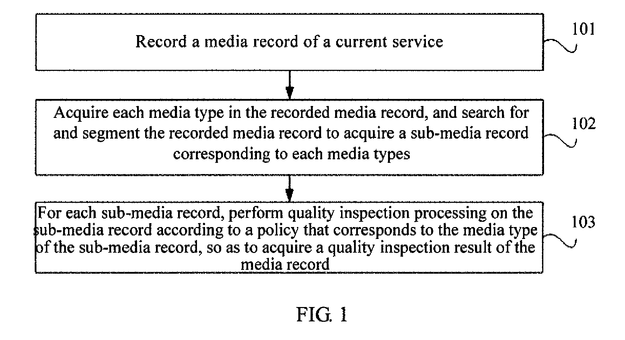

FIG. 1 is a flowchart of an embodiment of a quality inspection processing method according to the present invention. As shown in FIG. 1, the method according to this embodiment includes the following steps:
Step 101: Record a media record of a current service.

In addition, preferably, a unique access identifier may further be allocated to the current service, and the entire media record (for example, voices, texts, emails, and videos) made for the current service are associated with the unique access identifier so that the media records of the service are subsequently extracted at a time.

Step 102: Acquire each media type in the recorded media record, and search for and segment the recorded media record to acquire a sub-media record corresponding to each media type.

In this embodiment, preferably, the media type included in the media record may be one or more of the following: a voice media type, a video media type, a text media type, an email media type, a fax media type, and the like. Then, the sub-media record included in the media record includes one or more of the following: a sub-media record corresponding to the voice media type, a sub-media record corresponding to the video media type, a sub-media record corresponding to the text media type, a sub-media record corresponding to the email media type, a sub-media record corresponding to the fax media type, and the like.

Step 103: For each sub-media record, perform quality inspection processing on the sub-media record according to a policy that corresponds to the media type of the sub-media record, so as to acquire a quality inspection result of the media record.

In this embodiment, a media record of a current service is recorded; each media type in the recorded media record is acquired, the recorded media record is searched for and segmented to acquire a sub-media record corresponding to each media type; in addition, for each sub-media record, quality inspection processing is performed on the sub-media record according to a policy that corresponds to the media type of the sub-media record, so as to acquire a quality inspection result of the media record. In this way, a quality inspector does not need to perform a quality inspection on the entire media record, but only needs to review the quality inspection result to complete the quality inspection on the entire media record, thereby effectively improving the quality inspection efficiency.

Further, in another embodiment of the present invention, on the basis of the embodiment shown in the foregoing FIG. 1, when the media type is a voice media type, a policy corresponding to the voice media type includes one or a combination of the following: a voice keyword retrieval policy, a voice emotion detecting policy, and a voice conflict detecting policy.

When the media type is a text media type, an email media type, or a fax media type, a policy corresponding to the text media type, the email media type, or the fax media type includes: a text keyword retrieval policy.

When the media type is a video media type, a policy corresponding to the video media type includes: a key event retrieval policy.

Further, a specific implementation manner for step 103 may be specifically as follows:

For each sub-media record, marking processing is performed on the sub-media record according to a policy that corresponds to the media type of the sub-media record, so as to acquire a quality inspection result of the media record.

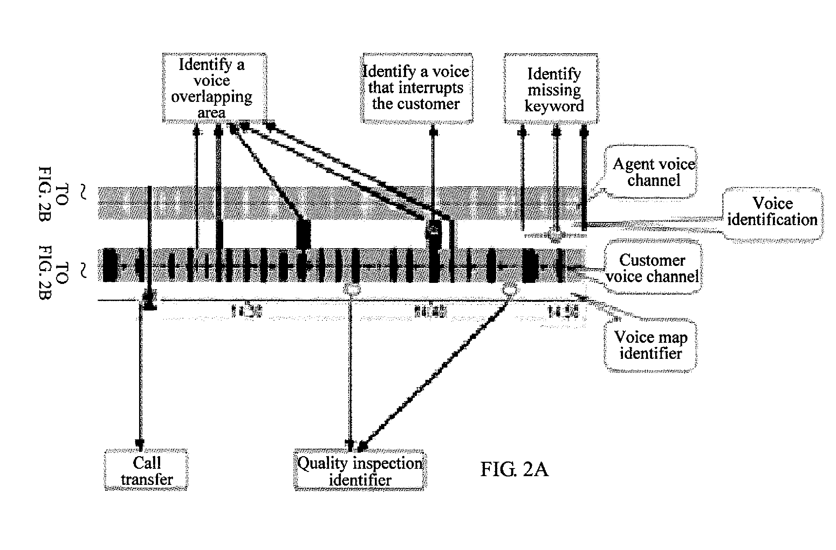

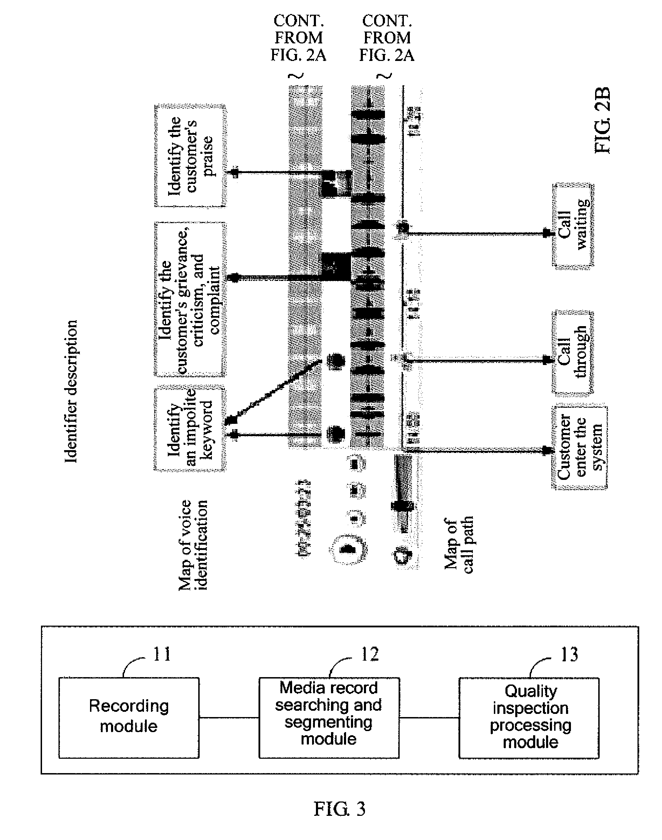

For example, in this embodiment, when a customer inquires about a service by accessing a call center by using a web page, the customer have a text conversation with an attendant in real time, and if the conversation fails to be clearly carried out, the attendant calls back the customer and performs the inquiry service for the customer by using voice. However, due to some reasons, the attendant cannot satisfy the customer's inquiry, and redirects the inquiry to another attendant, eventually completing the inquiry service between the original attendant and the customer. FIG. 2A and FIG. 2B are a schematic diagram of a specific implementation manner of a quality inspection processing method according to the present invention. As shown in FIG. 2A and FIG. 2B, a unique access identifier is allocated to the inquiry service, a media record of the service is recorded, media types, that is, a text media type and a voice media type, in the recorded media record are acquired, and a policy corresponding to the text media type and a policy corresponding to the voice media type are separately acquired. Specifically, according to the policy (for example, a keyword retrieval policy) corresponding to the text media type, quality inspection processing is performed on a text conversation, that is, a sub-media record corresponding to the text type. For example, an impolite keyword is identified and marked. In addition, according to the policy (for example, a voice emotion detecting policy and a voice conflict detecting policy) corresponding to the voice media type, quality inspection processing is performed on voice conversations between the two attendants and the customer, that is, sub-media records corresponding to the voice type. For example, a voice of the customer's grievance, criticism, complaint and/or praise is identified. Further, a missing keyword of the attendant may also be identified and marked. Still further, a voice conflict, for example, a voice overlapping area or a voice that interrupts the customer, may also be identified and marked. The missing keyword refers to a predetermined keyword that must be spoken by the attendant, but is not spoken by the attendant during the conversations.

Still further, for an accurate subsequent check on the quality inspection result, the method may further include:
acquiring the quality inspection result of the media record from the quality inspector, and separately reviewing the quality inspection result of the media record acquired by performing quality inspection processing on the sub-media record corresponding to each media type in the media record, and the quality inspection result of the media record acquired from the quality inspector according to the policy corresponding to each media type.

Still further, the method may further include:
displaying the quality inspection result of the media record.

FIG. 3 is a schematic structural diagram of an embodiment of a quality inspection processing device according to the present invention. As shown in FIG. 3, the device according to this embodiment includes: a recording module 11, a media record searching and segmenting module 12, and a quality inspection processing module 13. The recording module 11 is configured to record a media record of a current service; the media record searching and segmenting module 12 is configured to acquire each media type in the recorded media record, and search for and segment the recorded media record to acquire a sub-media record corresponding to each media type; and the quality inspection processing module 13 is configured to, for each sub-media record, perform quality inspection processing on the sub-media record according to a policy that corresponds to the media type of the sub-media record, so as to acquire a quality inspection result of the media record.

The quality inspection processing device according to this embodiment may implement the technical solution in the method embodiment shown in FIG. 1 under a similar implementation principle. The details are not repeatedly described herein.

In this embodiment, a media record of a current service is recorded; each media type in the recorded media record is acquired, the recorded media record is searched for and segmented to acquire a sub-media record corresponding to each media type; in addition, for each sub-media record, quality inspection processing is performed on the sub-media record according to a policy that corresponds to the media type of the sub-media record, so as to acquire a quality inspection result of the media record. In this way, a quality inspector does not need to perform a quality inspection on the entire media records, but only needs to review the quality inspection result to complete the quality inspection on the entire media records, thereby effectively improving the quality inspection efficiency.

Further, in another embodiment of the present invention, on the basis of the embodiment shown in the foregoing FIG. 3, the quality inspection processing module 14 is specifically configured to mark the sub-media record according to the policy that corresponds to the media type of the sub-media record; or mark and score the sub-media record.

In addition, the device may further include: a display module, configured to display the quality inspection result of the media record.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A quality inspection processing method, comprising:
recording a media record of a current service;
acquiring each media type in the recorded media record, and searching for and segmenting the recorded media record to acquire a sub-media record corresponding to each media type; and
for each sub-media record, performing quality inspection processing on the sub-media record according to a policy that corresponds to the media type of the sub-media record, so as to acquire a quality inspection result of the media record.

2. The quality inspection processing method according to claim 1, wherein the performing quality inspection processing on the sub-media record according to a policy that corresponds to the media type of the sub-media record comprises:
marking the sub-media record according to the policy that corresponds to the media type of the sub-media record; or
marking and scoring the sub-media record according to the policy that corresponds to the media type of the sub-media record.

3. The quality inspection processing method according to claim 2, wherein the media type of the sub-media record comprises one or a combination of the following: a voice media type, a video media type, a text media type, an email media type, and a fax media type.

4. The quality inspection processing method according to claim 3, wherein when the media type is a voice media type, a policy that corresponds to the voice media type comprises one or a combination of the following: voice keyword retrieval, voice emotion detecting, and voice conflict detecting.

5. The quality inspection processing method according to claim 3 or 4, wherein when the media type is a text media type, an email media type, or a fax media type, a policy corresponding to the text media type, the email media type, or the fax media type comprises: text keyword retrieval.

6. The quality inspection processing method according to claim 5, wherein when the media type is a video media type, a policy corresponding to the video media type comprises: event retrieval.

7. The quality inspection processing method according to any one of claims 1 to 6, further comprising:
displaying the quality inspection result of the media record.

8. A quality inspection processing device, comprising:
a recording module, configured to record a media record of a current service;
a media record searching and segmenting module, configured to acquire each media type in the recorded media record, and search for and segment the recorded media record to acquire a sub-media record corresponding to each media type; and
a quality inspection processing module, configured to: for each sub-media record, perform quality inspection processing on the sub-media record according to a policy that corresponds to the media type of the sub-media record, so as to acquire a quality inspection result of the media record.

9. The quality inspection processing device according to claim 8, wherein the quality inspection processing module is specifically configured to separately mark the sub-media record according to the policy that corresponds to the media type of the sub-media record; or mark and score the sub-media record.

10. The quality inspection processing device according to claim 8 or 9, further comprising:
a display module, configured to display the quality inspection result of the media record.
